# EUROPEAN PATENT APPLICATION

(11) **EP 4 804 652 A1**
(43) Date of publication of application: **09.09.2026**
(21) Application number: 23957351.2
(22) Date of filing: 03.11.2023
(51) Int. Cl.: H04W 52/42

(54) **REPORTING METHOD AND APPARATUS, RECEIVING METHOD AND APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2023/129748
(87) International publication number: WO 2025/091495

(57) **Abstract**

The present disclosure provides a reporting method and apparatus, a receiving method and apparatus, a communication device, a communication system, and a storage medium. The method comprises: receiving first information, wherein the first information is used for configuring the number of transmission repetitions N for a physical uplink shared channel (PUSCH), and configuring a simultaneous transmission across multi-antenna panels (STxMP) scheme for the PUSCH, wherein N is a positive integer greater than 1; and reporting power headroom reports (PHRs) corresponding to different PUSCH transmissions associated with transmission/reception points (TRPs) or sounding reference signal (SRS) resource sets or transmission configuration indication states (TCI states), wherein the PHRs are type 1 PHRs. According to the method of the present disclosures, in the STxMP scheme and repeatedly transmitting the PUSCH, the reporting effect of the PHRs of a terminal can be effectively improved.

## Description

### TECHNICAL FIELD

The present disclosure relates to the field of communication technology, and more particularly to a reporting method and apparatus, a receiving method and apparatus, a communication device, a communication system, and a storage medium.

### BACKGROUND

In a new radio (NR) system, a coordinated multi-point (CoMP) transmission has become an important technical means to improve a coverage at a cell edge and provide a better service quality within a service area. It is desirable to achieve a simultaneous coordinated transmission to a plurality of transmission and reception points (TRPs) via a plurality of panels, thereby enhancing the transmission reliability and throughput.

### SUMMARY

Embodiments of the present disclosure provide a reporting method and apparatus, a receiving method and apparatus, a device, a communication system, a chip system, a storage medium, a computer program, and a computer program product, which may be applied to the field of communication technology, to solve a technical problem that "in the related art, a reporting effect of a power headroom report (PHR) of a terminal is not good in a case where a transmission scheme of simultaneous transmission from multi-panel (STxMP) and a transmission repetition for a physical uplink shared channel (PUSCH) are performed".

The present disclosure provides a reporting method and apparatus, a receiving method and apparatus, a communication device, a communication system, a chip system, a storage medium, a computer program and a computer program product.

According to a first aspect of the embodiments of the present disclosure, a reporting method is provided, which is performed by a terminal and includes: receiving first information, in which the first information is used to configure a quantity N of transmission repetitions for a physical uplink shared channel (PUSCH) and to configure a simultaneous transmission from multi-panel (STxMP) for the PUSCH, in which N is a positive integer greater than 1; and reporting power headroom reports (PHRs) corresponding to different PUSCH transmissions associated with transmission and reception points (TRPs) or sounding reference signals (SRS) resource sets or transmission configuration indication (TCI) states, in which the PHRs are each a type 1 PHR.

According to a second aspect of the embodiments of the present disclosure, a receiving method is provided, which is performed by a network device and includes: sending first information, in which the first information is used to configure a quantity N of transmission repetitions for a physical uplink shared channel (PUSCH) and to configure a simultaneous transmission from multi-panel (STxMP) for the PUSCH, in which N is a positive integer greater than 1; and receiving power headroom reports (PHRs) corresponding to different PUSCH transmissions associated with transmission and reception points (TRPs) or sounding reference signal (SRS) resource sets or transmission configuration indication (TCI) states, in which the PHRs are each a type 1 PHR.

According to a third aspect of the embodiments of the present disclosure, a reporting method is provided, which includes: sending, by a network device, first information, in which the first information is used to configure a quantity N of transmission repetitions for a physical uplink shared channel (PUSCH) and to configure a simultaneous transmission from multi-panel (STxMP) for the PUSCH, in which N is a positive integer greater than 1; receiving, by a terminal, the first information; reporting, by the terminal, power headroom reports (PHRs) corresponding to different PUSCH transmissions associated with associated transmission and reception points (TRPs) or sounding reference signal (SRS) resource sets or transmission configuration indication (TCI) states, in which the PHRs are each a type 1 PHR; and receiving, by the network device, the PHRs corresponding to the different PUSCH transmissions associated with the TRPs or the SRS resource sets or the TCI states.

According to a fourth aspect of the embodiments of the present disclosure, a reporting apparatus is provided, which includes: a transceiving module, configured to receive first information, in which the first information is used to configure a quantity N of transmission repetitions for a physical uplink shared channel (PUSCH) and to configure a simultaneous transmission from multi-panel (STxMP) for the PUSCH, in which N is a positive integer greater than 1; and a processing module, configured to report power headroom reports (PHRs) corresponding to different PUSCH transmissions associated with transmission and reception points (TRPs) or sounding reference signal (SRS) resource sets or transmission configuration indication (TCI) states, in which the PHRs are each a type 1 PHR.

According to a fifth aspect of the embodiments of the present disclosure, a receiving apparatus is provided, which includes: a transceiving module, configured to send first information and receive power headroom reports (PHRs) corresponding to different physical uplink shared channel (PUSCH) transmissions associated with transmission and reception points (TRPs) or sounding reference signal (SRS) resource sets or transmission configuration indication (TCI) states, in which the first information is used to configure a quantity N of transmission repetitions for a PUSCH and to configure a simultaneous transmission from multi-panel (STxMP) for the PUSCH, in which N is a positive integer greater than 1, and the PHRs are each a type 1 PHR.

According to a sixth aspect of the embodiments of the present disclosure, a communication device is provided, which includes: one or more processors; and the processor is configured to invoke instructions to cause the communication device to perform a reporting method of the first aspect or the third aspect, or to perform a receiving method of the second aspect.

According to a seventh aspect of the embodiments of the present disclosure, a communication system is provided, which includes a terminal and a network device, in which the terminal is configured to implement a reporting method of the first aspect, and the network device is configured to implement a receiving method of the second aspect.

According to an eighth aspect of the embodiments of the present disclosure, a storage medium is provided, which has stored thereon instructions that, when run on a communication device, cause the communication device to perform a reporting method of the first aspect or the third aspect, or to perform a receiving method of the second aspect.

### BRIEF DESCRIPTION OF THE DRAWINGS

In order to more clearly illustrate the technical solutions in embodiments of the present disclosure or the background, drawings that are to describe embodiments of the present disclosure or the background will be described below.
FIG. 1 is a schematic diagram of an architecture showing a communication system according to embodiments of the present disclosure;
FIG. 2A is a schematic diagram of a multi-panel/multi-TRP transmission scenario scheduled by single downlink control information (S-DCI);
FIG. 2B is a schematic diagram of a multi-panel/multi-TRP transmission scenario scheduled by multi-downlink control information (M-DCI);
FIG. 3A is an example of a transmission repetition type A for a PUSCH in an embodiment of the present disclosure;
FIG. 3B is an example of a transmission repetition type B for a PUSCH in an embodiment of the present disclosure;
FIG. 3C is an example of a transmission repetition type B for a PUSCH in another embodiment of the present disclosure;
FIG. 3D is an example of a transmission repetition type B for a PUSCH in yet another embodiment of the present disclosure;
FIG. 4 is an interactive schematic diagram showing a reporting method according to embodiments of the present disclosure;
FIG. 5A is another interactive schematic diagram showing a reporting method according to embodiments of the present disclosure;
FIG. 5B is yet another interactive schematic diagram showing a reporting method according to embodiments of the present disclosure;
FIG. 6 is an interactive schematic diagram showing a receiving method according to embodiments of the present disclosure;
FIG. 7 is still yet another interactive schematic diagram showing a reporting method according to embodiments of the present disclosure;
FIG. 8A is a block diagram of a reporting apparatus according to embodiments of the present disclosure;
FIG. 8B is a block diagram of a receiving apparatus according to embodiments of the present disclosure;
FIG. 9A is a block diagram of a communication device according to embodiments of the present disclosure; and
FIG. 9B is a block diagram of a chip according to embodiments of the present disclosure.

### DETAILED DESCRIPTION

Embodiments of the present disclosure provide a reporting method and apparatus, a receiving method and apparatus, a communication device, a communication system, and a storage medium. In some embodiments, terms such as reporting method, and information processing method and communication method may be used interchangeably; terms such as reporting apparatus, and information processing apparatus and communication apparatus may be used interchangeably; terms such as receiving method, and information processing method and communication method may be used interchangeably; terms such as receiving apparatus, and information processing apparatus and communication apparatus may be used interchangeably; and terms such as information processing system and communication system may be used interchangeably.

Embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the present disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" means two or more.

In some embodiments, the terms such as "at least one of", "one or more", "a plurality of", "multiple", etc. may be used interchangeably.

The terms such as "at least one of A, B, C... " and "A and/or B and/or C... " in embodiments of the present disclosure, include a case where any one of A, B, C... exists alone, and a case where any combination of any of A, B, C... exists. Each case may exist alone. For example, "at least one of A, B, or C" includes cases of A alone, B alone, C alone, a combination of A and B, a combination of A and C, a combination of B and C, and a combination of A and B and C; for example, A and/or B includes cases of A alone, B alone, and a combination of A and B.

In some embodiments, the terms such as "in one case, A; in another case, B", "in response to one case, A; in response to another case, B", etc. may include the following technical solutions according to situations: A is executed independently of B, i.e., in some embodiments, A; B is executed independently of A, i.e., in some embodiments, B; A and B are selectively executed, i.e., in some embodiments, one is selected from A and B to be executed; both A and B are executed, i.e., in some embodiments, A and B. The same applies when there are more branches such as A, B, and C.

The prefixes such as "first" and "second" in the embodiments of the present disclosure are only used to distinguish different descriptive objects, and do not impose limitations on the position, order, priority, quantity or content of the described objects. For the statement of the described objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", "subject", etc. may be used interchangeably.

In some embodiments, "network" may be interpreted as a device included in a network (for example, an access network device, a core network device, etc.).

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. may be used interchangeably.

In some embodiments, obtaining data, information, etc. shall comply with laws and regulations of a country where it is located.

In some embodiments, data, information, etc. may be obtained after obtaining users' consent.

In addition, each element, each row, or each column in tables of embodiments of the present disclosure may be implemented as an independent embodiment. Any combination of elements, rows, or columns may also be implemented as an independent embodiment.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) can be made based on the above table. The names of parameters shown in the titles of the above tables may also adopt other names understandable in the communication device, and the values or representations of the parameters may also be other values or representations understandable in the communication device. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, curing, or pre-firing.

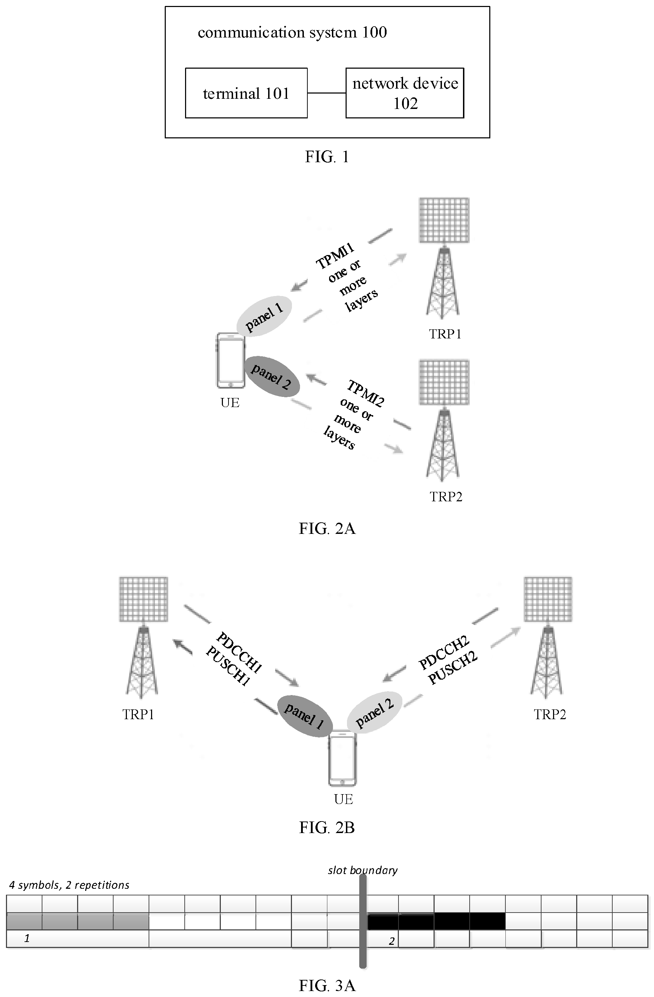

FIG. 1 is a schematic diagram of an architecture showing a communication system according to an embodiment of the present disclosure. As shown in FIG. 1, the communication system 100 may include a terminal 101 and a network device 102. The network device 102 may include at least one of an access network device or a core network device.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited thereto.

In some embodiments, the access network device is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited thereto.

In some embodiments, the technical solutions of the present disclosure may be applied to an Open RAN architecture. In this case, an interface between or within access network devices involved in the embodiments of the present disclosure may be transformed into an internal interface of Open RAN. The processes and information interactions between these internal interfaces may be implemented via software or a program.

In some embodiments, the access network device may be consist of a central unit (CU) and a distributed unit (DU). The CU may also be called a control unit. By adopting a CU-DU structure, a protocol layer of the access network device may be separated. Some of protocol layer functions are centrally controlled by the CU, while the remaining part or all of protocol layer functions are distributed in the DU, which is centrally controlled by the CU, but is not limited thereto.

In some embodiments, the core network device may be one device, including one or more network elements, and may also be a plurality of devices or a group of devices, each including all or part of one or more network elements. The network elements may be virtual and may also be physical. The core network includes, for example, at least one of an evolved packet core (EPC), a 5G core network (5GCN), or a next generation core (NGC).

As can be appreciated, the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the present disclosure may be applied to the communication system 100 or part of the entities shown in FIG. 1, but are not limited thereto. The entities shown in FIG. 1 are illustrative, and the communication system may include all or part of the entities in FIG. 1, or may include other entities than those shown in FIG. 1. The number and the form of the entities are arbitrary. The connection relationships between the subjects are illustrative. The entities may be connected or disconnected, and the connection may be in any manner, which may be a direct connection or an indirect connection, or may be a wired connection or a wireless connection.

The embodiments of the present disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new-radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

Optionally, the terminal may report an instantaneous transmit power for sending a physical uplink shared channel (PUSCH) transmission based on a power headroom report (PHR). The PHR reflects an available power of the terminal, i.e., a power headroom, which may be measured and reported to the base station during an uplink transmission control.

Optionally, the terminal sends a PHR in a case where the terminal is scheduled to transmit on an uplink shared channel (UL-SCH).

Optionally, a type 1 PHR is primarily associated with a multi-TRP (MTRP) uplink transmission. The PHR includes the power headroom and a maximum configured transmit power (Pcmax) on a component carrier. The Pcmax may be configured by a network display. Since the network knows a coding and modulation manner at a time corresponding to the power headroom report and a size of resources used by the terminal for transmission, it may determine an effective combination of modulation and coding manner and allocated resource size. Even when there is no an actual PUSCH transmission, the terminal may also report a type 1 power headroom (PH).

Optionally, a current PHR measurement mechanism is classified into an actual PHR (an actual type of PHR) or a virtual PHR (a virtual type of PHR). When there is the PUSCH transmission, the terminal reports the actual PHR to the base station. If there is no PUSCH transmission, the terminal calculates a PHR according to a predefined PUSCH format and sends it to the base station as the virtual PHR. The network may determine a bandwidth and a transmission mode that the terminal may send according to power difference information of the terminal.

Optionally, in some versions of communication protocol enhancement, it is desirable to achieve a simultaneous coordinated transmission to a plurality of TRP directions of the base station via a plurality of panels, to increase the transmission reliability and throughput, while effectively reducing a transmission latency under multiple TRPs. This requires the terminal to have a capability to send multiple beams simultaneously. The PUSCH transmission may be based on a multi-panel/multi-TRP transmission scheduled by a single physical downlink control channel (PDCCH), i.e., single downlink control information (S-DCI), as shown in FIG. 2A, and it may also be based on a multi-panel/multi-TRP transmission scheduled by different PDCCHs, i.e., multi-downlink control information (M-DCI), as shown in FIG. 2B. FIG. 2A is a schematic diagram of a multi-panel/multi-TRP transmission scenario scheduled by S-DCI, and FIG. 2B is a schematic diagram of a multi-panel/multi-TRP transmission scenario scheduled by M-DCI. Optionally, a multi-panel terminal implementation typically involves configuring a plurality of physical panels. The capabilities of different panels may differ, such as having different quantities of SRS ports. A maximum quantity of data transmission layers supported by each panel may also differ, for example, one panel supports a maximum of 2 layers of transmission, while another panel supports a maximum of 4 layers of transmission. A network scheduler may determine whether the terminal is currently suitable for an uplink STxMP. In a case where the terminal is currently suitable for the uplink STxMP and is scheduled at the same time, the network may directly or indirectly indicate related transmission parameters, including specific beamforming information of the terminal, a quantity of data layers used for transmission, an allocation of demodulation reference signal (DMRS) ports used, and precoding indication information.

Optionally, transmission schemes supported by the uplink STxMP for the PUSCH based on S-DCI include the following.

One scheme is a space division multiplexing (SDM) scheme: One transport block (TB) of the PUSCH transmits to two different TRPs on the same time-frequency resource via corresponding DMRS ports or port combinations respectively allocated on different panels. Different panels/TRPs/transmission occasions (TOs) are associated with different transmission configuration indication states (TCI states) respectively, that is, associated with different beams.

Another scheme is a single frequency network (SFN) scheme: One TB of the PUSCH transmits to two different TRPs on the same time-frequency resource via the same DMRS port or port combination allocated on different panels. Different panels/TRPs/TOs are associated with different TCI states respectively.

Optionally, in an uplink multiple in multiple-out (MIMO) enhancement of some versions of communication protocol, a simultaneous uplink transmission to multiple TRPs may be achieved by considering a multi-panel terminal to further improve the uplink system transmission throughput and transmission reliability. For the simultaneous uplink transmission of the multi-panel terminal, since each panel of the terminal has an independent power amplifier (PA) implementation structure, it may support an independent power control process. Therefore, the Pcmax of the terminal may be defined according to different panels, or the Pcmax of the terminal as a whole may be considered. To support the uplink STxMP, a PHR reporting may be enhanced.

Optionally, in some versions of communication protocol, a repetition type A transmission manner may be as shown in FIG. 3A, and FIG. 3A is an example of a transmission repetition type A for a PUSCH in an embodiment of the present disclosure. In one communication protocol, a slot-level slot aggregation PUSCH transmission is not suitable for certain situations with very low latency requirements and very high reliability requirements. One PUSCH is transmitted over K consecutive slots, i.e. K transmission occasions. A transmission begins on an S-th symbol in an initial slot, and each transmission occasion lasts for L symbols. At the same time, S+L does not exceed a slot boundary. The base station may indicate whether a semi-static flexible symbol is a dynamic uplink (UL) symbol or a dynamic downlink (DL) symbol via a slot format indicator. Therefore, the semi-static flexible symbol may be a usable symbol or an unusable symbol for the PUSCH. In a case where the semi-static flexible symbol is the unusable symbol, a repetition transmission TO needs to be discarded.

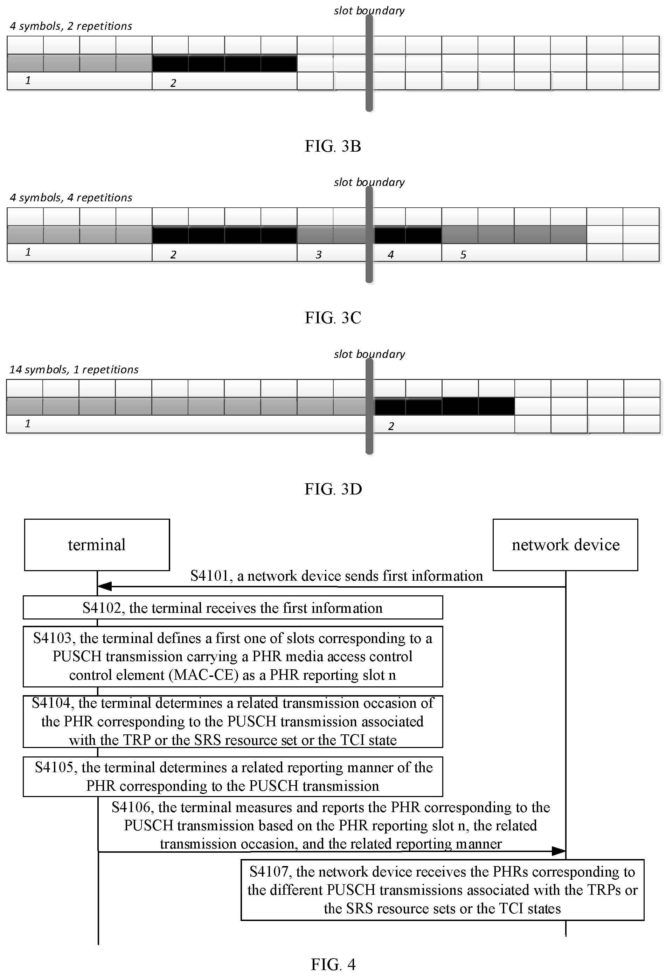

Optionally, in order to reduce the latency and improve the reliability, in some versions of communication protocol, supporting a PUSCH transmission repetition scheme based on mini-slots, and allowing the PUSCH transmission across slots may further reduce the latency. In a time domain, one PUSCH begins transmission on an S-th symbol in an initial slot and continuously transmits K transmission occasions (nominal repetitions). Each transmission occasion occupies L symbols consecutively (in a back-to-back manner), and a transmission S+L may cross a slot boundary. As shown in FIG. 3B, FIG. 3B is an example of a transmission repetition type B for a PUSCH in an embodiment of the present disclosure. In FIG. 3B, K = 2, L = 4, and S = 4. As shown in FIG. 3C, FIG. 3C is an example of a transmission repetition type B for a PUSCH in another embodiment of the present disclosure. In FIG. 3C, K = 4, L = 4, S = 4. As shown in FIG. 3D, FIG. 3D is an example of a transmission repetition type B for a PUSCH in yet another embodiment of the present disclosure. In FIG. 3D, K = 1, L = 14, and S = 4.

Optionally, in a case where a transmission occasion occurs across the slot boundary, a transmission is re-segmented, corresponding to an actual quantity K' of transmissions, i.e., actual repetitions. For an entire transmission, slot L*K represents a length of a time window for the PUSCH transmission, a DL symbol is discarded and not used for the PUSCH transmission. The base station may indicate whether a semi-static flexible symbol is a dynamic UL symbol or a dynamic DL symbol via a slot format indicator. Therefore, the semi-static flexible symbol may be a usable symbol or an unusable symbol for the PUSCH. In a case where the semi-static flexible symbol is the unusable symbol, the unusable symbol needs to be discarded, and then the transmission should proceed on remaining usable symbols.

FIG. 4 is an interactive schematic diagram showing a reporting method according to embodiments of the present disclosure. As shown in FIG. 4, embodiments of the present disclosure relate to the reporting method, which may be performed by a communication system 100. The above method includes the following steps.

In step S4101, a network device sends first information.

The first information is used to configure a quantity N of transmission repetitions for a PUSCH and to configure an STxMP for the PUSCH, and N is a positive integer greater than 1.

In some embodiments, the network device may configure the quantity N of transmission repetitions for the PUSCH via a high layer signaling, and N is the positive integer greater than 1.

In some embodiments, the network device may configure the STxMP for the PUSCH via the high layer signaling.

In some embodiments, the first information is indicated by downlink control information (DCI) or configured by the high layer signaling.

In some embodiments, the first information includes the DCI, and a first high layer signaling corresponding to a time domain resource allocation (TDRA) in the DCI is configured to indicate the quantity N of transmission repetitions. For example, the first information may indicate the quantity N of transmission repetitions based on a high layer signaling numberoOfRepetition corresponding to the TDRA in the DCI, and the high layer signaling numberoOfRepetition may be an optional example of the first high layer signaling. Alternatively, the quantity N of transmission repetitions may be determined by a high layer signaling numberoOfRepetition corresponding to a TDRA in the DCI, and the quantity N of transmission repetitions is carried in the first information to indicate to a terminal, which will not be particularly defined herein.

In some embodiments, the first information may be another high layer signaling, which may be referred to as a second high layer signaling, to configure the quantity N of transmission repetitions. For example, the network device may configure a specific quantity N of transmission repetitions via the high layer signaling.

This effectively improves the flexibility and accuracy of configuring the quantity N of transmission repetitions, making it suitable for personalized communication scenarios effectively.

In some embodiments, the STxMP is a PUSCH transmission based on an SDM scheduled by S-DCI, and at least two SRS resource sets are configured for the PUSCH.

In some embodiments, the STxMP is a PUSCH transmission based on a spatial multiplexing SFN scheduled by S-DCI, and at least two SRS resource sets are configured for the PUSCH.

In some embodiments, the STxMP is a PUSCH transmission scheduled by M-DCI, and at least two SRS resource sets are configured for the PUSCH.

This may, in a case of different STxMP, effectively report PHRs corresponding to different PUSCH transmissions associated with TRPs, SRS resource sets or TCI states, greatly improving the flexibility of PHR reporting and making it suitable for personalized STxMP configurations.

In step S4102, the terminal receives the first information.

In some embodiments, the terminal may receive the first information sent by the network device and determine a content configured for it by the network device based on the first information to support PHR reporting.

In some embodiments, the PHRs are each a type 1 PHR. This effectively supports reporting of type 1 PHRs corresponding to the different PUSCH transmissions.

In step S4103, the terminal defines a first one of slots corresponding to a PUSCH transmission carrying a PHR media access control control element (MAC-CE) as a PHR reporting slot n.

The MAC-CE is the media access control control element.

In some embodiments, the PHR reporting slot n may be determined, and n is a positive integer. The PHR reporting slot n may be used to report a corresponding PHR. In the embodiments of the present disclosure, the first one of slots corresponding to the PUSCH transmission carrying the PHR MAC-CE may be defined as the PHR reporting slot n. In other words, the first one of slots corresponding to the PUSCH transmission of carrying the PHR MAC-CE is used as the PHR reporting slot n. For example, a plurality of slots corresponding to the PUSCH transmission carrying the PHR MAC-CE may be determined first, and the first slot of the plurality of slots may be used as the PHR reporting slot n.

Therefore, a suitable PHR reporting slot n may be determined for PHR reporting, which may support an accurate reporting of a corresponding PHR and effectively avoid introducing interference to a transmission of other slots, thereby improving the PHR reporting effect.

In step S4104, the terminal determines a related transmission occasion of the PHR corresponding to the PUSCH transmission associated with the TRP or the SRS resource set or the TCI state.

The related transmission occasion is used for a measurement and calculation of the PHR corresponding to the PUSCH transmission, and it is determined that related transmission occasions, respectively corresponding to the different PUSCH transmissions, correspond to the same transmission occasion (TO) in the transmission repetitions for the PUSCH with an STxMP configuration.

In some embodiments, the terminal may determine the related transmission occasion of the PHR corresponding to the PUSCH transmission associated with the TPR.

In some embodiments, the terminal may determine the related transmission occasion of the PHR corresponding to the PUSCH transmission associated with the SRS resource set.

In some embodiments, the terminal may determine the related transmission occasion of the PHR corresponding to the PUSCH transmission associated with the TCI state.

In other words, the PHRs for the plurality of PUSCH transmissions associated with different SRS resource sets may be reported together; or the PHRs for the plurality of PUSCH transmissions associated with different TRPs may be reported together; or the PHRs for the plurality of PUSCH transmissions associated with different TCI states may be reported together.

In some embodiments, the related transmission occasion is used for the measurement and calculation of the PHR corresponding to the PUSCH transmission.

Therefore, by determining the related transmission occasion of the PHR corresponding to the PUSCH transmission associated with the TRP or the SRS resource set or the TCI state, the terminal may accurately determine the related transmission occasion for measuring and calculating the PHRs of the different PUSCH transmissions. This may effectively improve a measurement and calculation effect of the PHR corresponding to the PUSCH transmission, and support the network device to obtain more accurate PHRs.

In some embodiments, the related transmission occasion may be determined according to a TO corresponding to an earliest transmission repetition for the PUSCH in a slot overlapping with the PHR reporting slot n. For example, the related transmission occasion corresponding to the PUSCH transmission may be determined according to whether the earliest transmission repetition for the PUSCH is a valid TO, combined with the TO corresponding to the earliest transmission repetition for the PUSCH. The earliest transmission repetition for the PUSCH is one earliest transmission repetition for the PUSCH associated with this PUSCH transmission, and a slot of the earliest transmission repetition for the PUSCH overlaps each other with the first one of slots corresponding to the PUSCH transmission carrying the PHR MAC-CE. This may accurately determine the related transmission occasion corresponding to the PUSCH transmission to support an accurate measurement and calculation of the corresponding PHR.

In some embodiments, the TO corresponding to the earliest transmission repetition for the PUSCH is taken as the related transmission occasion in a case where the earliest transmission repetition for the PUSCH in the slot overlapping with the PHR reporting slot n is a valid TO.

In some embodiments, a reference transmission occasion is taken as the related transmission occasion in a case where the earliest retransmission repetition for the PUSCH in the slot overlapping with the PHR reporting slot n is an invalid TO and is discarded. The reference transmission occasion may be determined based on the TO corresponding to the earliest transmission repetition for the PUSCH. This may support an accurate determination of the related transmission occasion corresponding to each PUSCH transmission.

In some embodiments, the reference transmission occasion is a nearest transmission occasion within the PHR reporting slot n after the transmission occasion of the earliest transmission repetition for the PUSCH, and all PUSCH transmissions corresponding to the nearest transmission occasion are each an actual transmission.

In some embodiments, the reference transmission occasion is a nearest transmission occasion before the PHR reporting slot n, and all PUSCH transmissions corresponding to the nearest transmission occasion are each an actual transmission.

This achieves an accurate definition of the reference transmission occasion, to improve the accuracy of the definition of the related transmission occasion.

Embodiments the present disclosure also provide another manner for determining the related transmission occasion, which may take a first one of transmission occasions (TOs) corresponding to the transmission repetitions for the PUSCH as the related transmission occasion. For example, one PUSCH transmission may correspond to a plurality of transmission repetitions associated for the PUSCH. Each transmission repetition for the PUSCH corresponds to one TO. The first one transmission occasion (TO) in the plurality of transmission occasions (TOs) may be used as the related transmission occasion of the PUSCH transmission, thereby determining the related transmission occasion corresponding to each PUSCH. This effectively improves the flexibility and accuracy of determining the related transmission occasion, and makes it effectively suitable for personalized communication scenarios.

In some embodiments, the terminal may also determine a PHR type corresponding to the PUSCH transmission. The PHR may be an actual PHR or a virtual PHR. In other words, the PHR type is an actual type (the actual PHR) or a virtual type (the virtual PHR).

In some embodiments, the earliest transmission repetition for the PUSCH in the slot overlapping with the PHR reporting slot n may be used as a reference to determine the PHR type corresponding to the PUSCH transmission. In some embodiments, in a case that the earliest transmission repetition for the PUSCH is an invalid TO and is discarded, the PHRs respectively corresponding to the PUSCH transmissions are each a virtual PHR. Alternatively, in a case that the earliest retransmission repetition for the PUSCH is an invalid TO and is discarded, and the PHR is measured based on a reference transmission occasion, then the PHRs corresponding to the PUSCH transmissions are each an actual PHR. This may effectively improve the accuracy of PHR reporting and support the network device to obtain more accurate PHR information.

In some embodiments, the reference transmission occasion is a nearest transmission occasion after the transmission occasion of the earliest transmission repetition for the PUSCH within the PHR reporting slot n, and all PUSCH transmissions corresponding to the nearest transmission occasion are each an actual transmission.

In some embodiments, the reference transmission occasion is a nearest transmission occasion before the PHR reporting slot n, and all PUSCH transmissions corresponding to the nearest transmission occasion are each an actual transmission.

In some embodiments, with an STxMP configuration, the different PUSCH transmissions associated with different TRPs or different TCI states or different SRS resource sets are each an actual transmission, and the PHRs corresponding to the different PUSCH transmissions are also each an actual PHR. For example, with the STxMP configuration, the different PUSCH transmissions associated with the different TRPs or the different TCI states or the different SRS resource sets each correspond to an actual transmission, and corresponding PHR reports are each an actual PHR.

In some embodiments, with an STxMP configuration, one PUSCH transmission of the different PUSCH transmissions associated with different TRPs or different TCI states or different SRS resource sets is an actual transmission, a PHR corresponding to the one PUSCH transmission is an actual PHR, a PHR corresponding to another PUSCH transmission is a virtual PHR, and the one PUSCH transmission and the other PUSCH transmission are associated with different TRPs or different TCI states or different SRS resource sets.

For example, with an STxMP configuration, only one PUSCH transmission of the different PUSCH transmissions associated with different TRPs is an actual transmission, a PHR corresponding to the one PUSCH transmission of the actual transmission is an actual PHR, and a PHR corresponding to another PUSCH transmission associated with the different TRPs is a virtual PHR.

For example, with an STxMP configuration, only one PUSCH transmission of the different PUSCH transmissions associated with different TCI states is an actual transmission, a PHR corresponding to the one PUSCH transmission of the actual transmission is an actual PHR, and a PHR corresponding to another PUSCH transmission associated with the different TCI state is a virtual PHR.

For example, with an STxMP configuration, only one PUSCH transmission of the different PUSCH transmissions associated with different SRS resource sets is an actual transmission, a PHR corresponding to the one PUSCH transmission of the actual transmission is an actual PHR, and a PHR corresponding to another PUSCH transmission associated with the different SRS resource set is a virtual PHR.

In some embodiments, with an STxMP configuration, none of the different PUSCH transmissions associated with different TRPs or different TCI states or different SRS resource sets is actual transmissions, and the PHRs corresponding to the different PUSCH transmissions are each a virtual PHR. For example, with the STxMP configuration, none of the different PUSCH transmissions associated with the different TRPs is an actual transmission, and the corresponding PHRs are each an virtual PHR. Alternatively, with the STxMP configuration, none of the different PUSCH transmissions associated with the different TCI states is an actual transmission, and the corresponding PHRs are each an virtual PHR. Alternatively, with the STxMP configuration, none of the different PUSCH transmissions associated with the different SRS resource sets is an actual transmission, and the corresponding PHRs are each an virtual PHR.

This may, with the STxMP configuration, support a flexible and accurate determination of the PHR type corresponding to the PUSCH transmission associated with the TRP or the SRS resource set or the TCI state, supporting the network device to know an accurate PHR type, and greatly improving a PHR reporting effect and reporting flexibility.

In step S4105, the terminal determines a related reporting manner of the PHR corresponding to the PUSCH transmission.

In some embodiments, the terminal may also determine the related reporting manner of the PHR corresponding to the PUSCH transmission, and the related reporting manner is used for a reporting of the PHR.

In some embodiments, the related reporting manner is associated with a PHR reporting mode, and the PHR reporting mode includes at least one of: a two-PHR mode, a multi-PHR mode, a mode where a two-PHR mode is not configured; or a mode where a multi-PHR mode is not configured. Therefore, it supports determining a suitable related reporting manner based on the PHR reporting mode correspondingly, and supports effectively and flexibly reporting of the PHRs of the different PUSCH transmissions.

In some embodiments, the related reporting manner includes at least one of: reporting the PHRs respectively corresponding to the different PUSCH transmissions; reporting a first PHR among the PHRs respectively corresponding to the different PUSCH transmissions; reporting a second PHR among the PHRs respectively corresponding to the different PUSCH transmissions; or reporting an average PHR of the PHRs respectively corresponding to the different PUSCH transmissions. This effectively improves the flexibility of choosing the related reporting manner and makes it suitable for personalized communication scenarios.

The first PHR may be selected and obtained from a plurality of PHRs. The second PHR may also be selected and obtained from the plurality of PHRs. The first PHR and the second PHR may be determined by different selection manners. The average PHR may be a PHR obtained by averaging the plurality of PHRs.

In some embodiments, the first PHR may also correspond to a transmission manner, which may be, for example, a single transmission and reception point (STRP) transmission or a multi-transmission and reception point (MTRP) transmission, which is not particularly defined herein.

In some embodiments, for the STRP transmission, the first PHR is a PHR corresponding to an actual PUSCH transmission.

In some embodiments, for the MTRP transmission, the first PHR is a PHR corresponding to a PUSCH transmission with a small absolute value of PH or a negative value of PH.

This allows the PHR measured and calculated to be adapted to the transmission manner, effectively improving an accuracy of PHR measurement and calculation for the STRP transmission or the MTRP transmission.

In some embodiments, the second PHR is a PHR corresponding to a first one of the SRS resource sets.

In some embodiments, the second PHR is a PHR corresponding to a control resource pool index CoresetPoolIndex#0.

In step S4106, the terminal measures and reports the PHR corresponding to the PUSCH transmission based on the PHR reporting slot n, the related transmission occasion, and the related reporting manner.

In some embodiments, after determining the PHR reporting slot n, the related transmission occasion and the related reporting manner corresponding to the PUSCH transmission, the terminal may measure and report the PHR corresponding to the PUSCH transmission based on the PHR reporting slot n, the related transmission occasion and the related reporting manner, to improve an accuracy and effect of PHR reporting for the different PUSCH transmissions.

In some embodiments, the different PUSCH transmissions support a transmission repetition type A and a transmission repetition type B. This makes the PHR reporting method effectively applicable to transmission repetition types of the different PUSCH transmissions, improving the practicality and applicability of PHR reporting.

In some embodiments, the different PUSCH transmissions support a scheduled PUSCH and a grant-free configured grant (CG) PUSCH. This makes the PHR reporting method effectively applicable to different PUSCH scheduling scenarios, improving the practicality and applicability of PHR reporting.

In some embodiments, the TCI states each include at least one of an uplink UL TCI state, a joint TCI state, or a TCI state beam direction, where the joint TCI state is indicated based on a unified TCI state, and the TCI state beam direction is indicated based on spatial relationship information.

In some embodiments, the TCI states each include the joint TCI state indicated by the unified TCI state, and/or the UL TCI state, and/or the TCI state beam direction indicated by the spatial relationship information.

In step S4107, the network device receives the PHRs corresponding to the different PUSCH transmissions associated with the TRPs or the SRS resource sets or the TCI states.

The PHRs are each the type 1 PHR.

In some embodiments, the network device may receive the PHRs corresponding to the different PUSCH transmissions associated with the TRPs. Alternatively, it may receive the PHRs corresponding to the different PUSCH transmissions associated with the SRS resource sets. Alternatively, it may receive the PHRs corresponding to the different PUSCH transmissions associated with the TCI states. This allows to obtain more effective and meaningful PHR information.

The reporting method involved in embodiments of the present disclosure may include at least one of the step S4101 to the step S4107. For example, the step S4101 may be implemented as an independent embodiment, the step S4102 may be implemented as an independent embodiment, and so on, which is not particularly defined herein. The steps S4101+S4102 may be implemented as an independent embodiment, and the steps S4101+S4102+S4103 may be implemented as an independent embodiment, which is not particularly defined herein.

In this implementation or embodiment, unless there is contradiction, each step may be independent, arbitrarily combined or exchanged in order, and optional manners or optional examples may be arbitrarily combined, and may be arbitrarily combined with any steps of other implementations or other embodiments.

Therefore, in this embodiment, the network device sends the first information, and the first information is used to configure the quantity N of transmission repetitions for the PUSCH and to configure the STxMP for the PUSCH, and N is the positive integer greater than 1. The terminal receives the first information and reports the PHRs corresponding to the different PUSCH transmissions associated with the TRPs or the SRS resource sets or the TCI states, and the PHRs are each the type 1 PHR. The network device receives the PHRs corresponding to the different PUSCH transmissions associated with the TRPs or the SRS resource sets or the TCI states. Therefore, in the case of the STxMP transmission scheme and the transmission repetition for the PUSCH, the PHR reporting effect of the terminal may be effectively improved. This may determine the suitable PHR reporting slot n for PHR reporting, to support the accurate reporting of the corresponding PHR, and may effectively avoid introducing interference to the transmission of other slots, thereby improving the PHR reporting effect. After determining the PHR reporting slot n, the related transmission occasion and the related reporting manner corresponding to the PUSCH transmission, the terminal may measure and report the PHR corresponding to the PUSCH transmission based on the PHR reporting slot n, the related transmission occasion and the related reporting manner, to improve the accuracy and effect of PHR reporting for the different PUSCH transmissions.

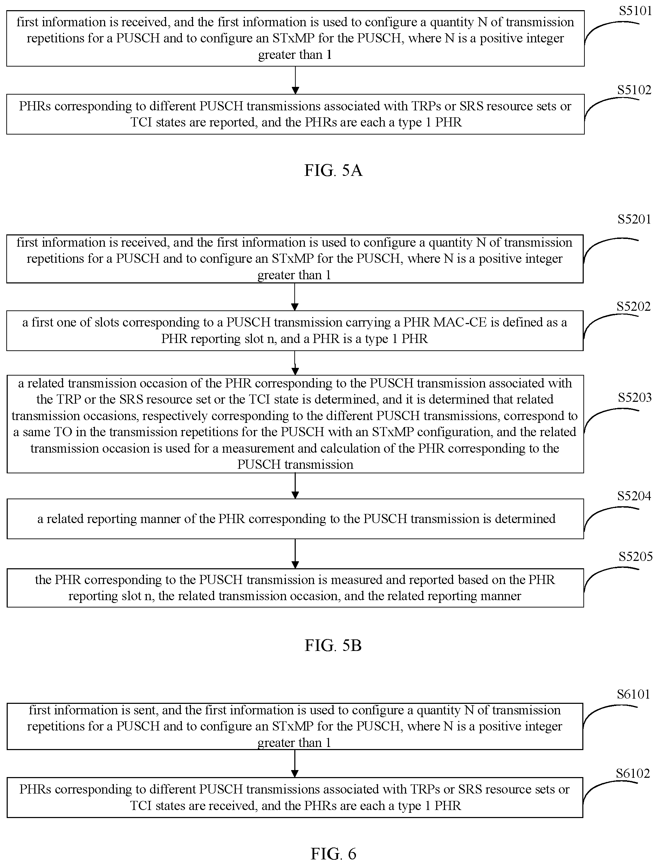

FIG. 5A is an interactive schematic diagram showing a reporting method according to another embodiment of the present disclosure. As shown in FIG. 5A, embodiments of the present disclosure relate to the reporting method, which may be performed by a terminal. The above method includes the following steps.

In step S5101, first information is received, and the first information is used to configure a quantity N of transmission repetitions for a PUSCH and to configure an STxMP for the PUSCH, where N is a positive integer greater than 1.

In step S5102, PHRs corresponding to different PUSCH transmissions associated with TRPs or SRS resource sets or TCI states are reported, and the PHRs are each a type 1 PHR.

The reporting method involved in embodiments of the present disclosure may include at least one of the step S5101 to the step S5102. For example, the step S5101 may be implemented as an independent embodiment, the step S5102 may be implemented as an independent embodiment, and so on, which is not particularly defined herein. The steps S5101+S5102 may be implemented as an independent embodiment, which is not particularly defined herein

In this implementation or embodiment, unless there is contradiction, each step may be independent, arbitrarily combined or exchanged in order, and optional manners or optional examples may be arbitrarily combined, and may be arbitrarily combined with any steps of other implementations or other embodiments.

FIG. 5B is yet another interactive schematic diagram showing a reporting method according to embodiments of the present disclosure. As shown in FIG. 5B, embodiments of the present disclosure relate to the reporting method, which may be performed by a terminal. The above method includes the following steps.

In step S5201, first information is received, and the first information is used to configure a quantity N of transmission repetitions for a PUSCH and to configure an STxMP for the PUSCH, where N is a positive integer greater than 1.

In step S5202, a first one of slots corresponding to a PUSCH transmission carrying a PHR MAC-CE is defined as a PHR reporting slot n, and a PHR is a type 1 PHR.

In step S5203, a related transmission occasion of the PHR corresponding to the PUSCH transmission associated with the TRP or the SRS resource set or the TCI state is determined, and it is determined that related transmission occasions, respectively corresponding to the different PUSCH transmissions, correspond to the same TO in the transmission repetitions for the PUSCH with an STxMP configuration, and the related transmission occasion is used for a measurement and calculation of the PHR corresponding to the PUSCH transmission.

In step S5204, a related reporting manner of the PHR corresponding to the PUSCH transmission is determined.

In step S5205, the PHR corresponding to the PUSCH transmission is measured and reported based on the PHR reporting slot n, the related transmission occasion, and the related reporting manner.

The reporting method involved in embodiments of the present disclosure may include at least one of the step S5201 to the step S5205. For example, the step S5201 may be implemented as an independent embodiment, the step S5202 may be implemented as an independent embodiment, and so on, which is not particularly defined herein. The steps S5201+S5202 may be implemented as an independent embodiment, which is not particularly defined herein.

In this implementation or embodiment, unless there is contradiction, each step may be independent, arbitrarily combined or exchanged in order, and optional manners or optional examples may be arbitrarily combined, and may be arbitrarily combined with any steps of other implementations or other embodiments.

FIG. 6 is an interactive schematic diagram showing a receiving method according to embodiments of the present disclosure. As shown in FIG. 6, embodiments of the present disclosure relate to the receiving method, which may be performed by a network device. The above method includes the following steps.

In step S6101, first information is sent, and the first information is used to configure a quantity N of transmission repetitions for a PUSCH and to configure an STxMP for the PUSCH, where N is a positive integer greater than 1.

In step S6102, PHRs corresponding to different PUSCH transmissions associated with TRPs or SRS resource sets or TCI states are received, and the PHRs are each a type 1 PHR.

The reporting method involved in embodiments of the present disclosure may include at least one of the step S6101 to the step S6102. For example, the step S6101 may be implemented as an independent embodiment, the step S6102 may be implemented as an independent embodiment, and so on, which is not particularly defined herein. The steps S6101+S6102 may be implemented as an independent embodiment, which is not particularly defined herein.

In this implementation or embodiment, unless there is contradiction, each step may be independent, arbitrarily combined or exchanged in order, and optional manners or optional examples may be arbitrarily combined, and may be arbitrarily combined with any steps of other implementations or other embodiments.

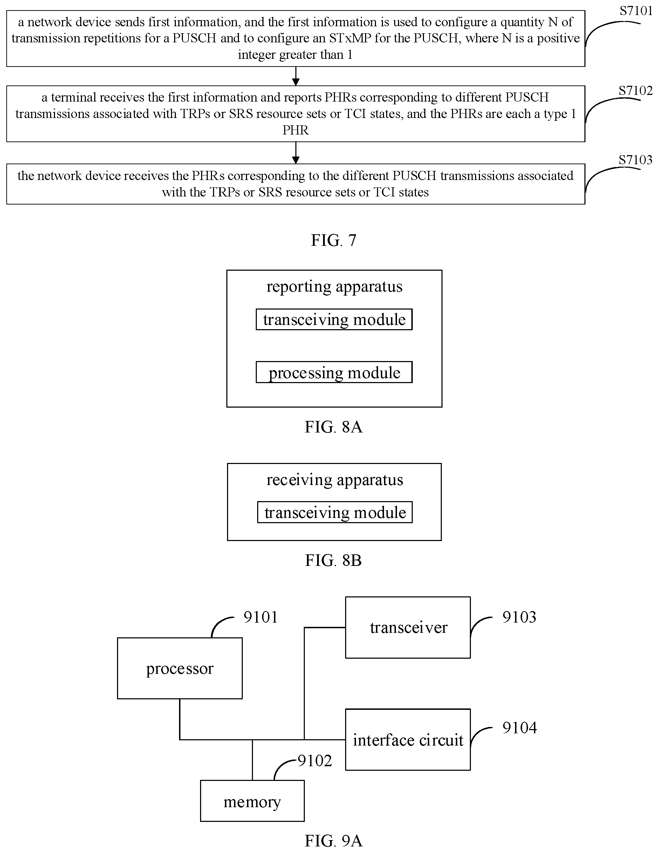

FIG. 7 is still yet another interactive schematic diagram showing a reporting method according to embodiments of the present disclosure. As shown in FIG. 7, embodiments of the present disclosure relate to the reporting method, which may be performed by a communication system. The above method includes the following steps.

In step S7101, a network device sends first information, and the first information is used to configure a quantity N of transmission repetitions for a PUSCH and to configure an STxMP for the PUSCH, where N is a positive integer greater than 1.

In step S7102, a terminal receives the first information and reports PHRs corresponding to different PUSCH transmissions associated with TRPs or SRS resource sets or TCI states, and the PHRs are each a type 1 PHR.

In step S7103, the network device receives the PHRs corresponding to the different PUSCH transmissions associated with the TRPs or SRS resource sets or TCI states.

The reporting method involved in embodiments of the present disclosure may include at least one of the step S7101 to the step S7103. For example, the step S7101 may be implemented as an independent embodiment, the step S7102 may be implemented as an independent embodiment, and so on, which is not particularly defined herein. The steps S7101+S7102 may be implemented as an independent embodiment, which is not particularly defined herein.

In this implementation or embodiment, unless there is contradiction, each step may be independent, arbitrarily combined or exchanged in order, and optional manners or optional examples may be arbitrarily combined, and may be arbitrarily combined with any steps of other implementations or other embodiments.

The following is an explanatory description of the above methods.

Optionally, the following embodiments are available.

Embodiments of the present disclosure provide a method for enhancing PHR reporting when configuring an STxMP transmission for a corresponding PUSCH. The specific method is as follows.

In a case where the PUSCH is configured with a quantity N of transmission repetitions, N>1 and a case of an STxMP, a corresponding transmission occasion and reporting method for PHR reporting may be defined.

In a case where a network configures a multi-PHR mode via a high layer signaling, the following may be implemented.

A repetition of an earliest valid transmission overlapping with a first one of slots of the PUSCH carrying an MAC-CE (an earliest transmission repetition for the PUSCH is a valid TO) is calculated, and for the PUSCH transmissions associated with different panels or TCI states or SRS resource sets and corresponding to the same valid TO, corresponding PHRs are reported.

In a case where a collision occurs with the repetition of the earliest valid transmission overlapping with the first one of slots of the PUSCH carrying the MAC-CE, and the repetition is discarded, the following are determined.

In Opt. 1, the corresponding PHRs are calculated and reported, and each is a virtual PHR.

In Opt.2, a PHR is calculated using a nearest TO after the repetition within the PHR reporting slot n, and for the PUSCH transmissions associated with different panels or TCI states or SRS resource sets and corresponding to the same nearest TO, corresponding PHRs are reported. The corresponding PHRs are each calculated as an actual PHR.

In Opt.3, a PHR is calculated using a nearest TO before the repetition and for the PUSCH transmissions associated with different panels or TCI states or SRS resource sets and corresponding to the same nearest TO, corresponding PHRs are reported. The corresponding PHRs are each calculated as an actual PHR.

In a case of configuring a multi-PHR mode or a single PHR mode, the following may be implemented.

In Alt.1, a repetition of an earliest valid transmission overlapping with a first one of slots of the PUSCH carrying an MAC-CE is calculated, and for the PUSCH transmissions associated with different panels or TCI states or SRS resource sets and corresponding to the same TO, and one of the PHRs is reported. In a case of an STRP, a PHR corresponding to an actual PUSCH is reported by default, and in a case of an MTRP, a PHR corresponding to a transmission with a small PH is reported.

In Alt.2, a repetition of an earliest valid transmission overlapping with a first one of slots of the PUSCH carrying an MAC-CE is calculated, and for the PUSCH transmissions associated with different panels or TCI states or SRS resource sets and corresponding to the same TO, and one of the PHRs is reported. By default, a PHR corresponding to a first one of SRS resource sets or to CoresetPoolIndex#0 is reported.

In Alt.3, a repetition of an earliest valid transmission overlapping with a first one of slots of the PUSCH carrying an MAC-CE is calculated, and for the PUSCH transmissions associated with different panels or TCI states or SRS resource sets and corresponding to the same TO, an average PHR is reported.

Embodiments of the present disclosure may be applied to an STxMP transmission based on an S-DCI or an M-DCI.

FIG. 8A is a block diagram of a reporting apparatus according to embodiments of the present disclosure. As shown in FIG. 8A, the reporting apparatus includes: a transceiving module, configured to receive first information, in which the first information is used to configure a quantity N of transmission repetitions for a PUSCH and to configure an STxMP for the PUSCH, and N is a positive integer greater than 1; and a processing module, configured to report PHRs corresponding to different PUSCH transmissions associated with TRPs or SRS resource sets or TCI states, where the PHRs are each a type 1 PHR.

In some embodiments of the present disclosure, the first information is indicated by a DCI or configured by a high layer signaling.

In some embodiments of the present disclosure, the STxMP is any one of: a PUSCH transmission based on an SDM scheduled by an S-DCI; a PUSCH transmission based on a spatial multiplexing SFN scheduled by an S-DCI; or a PUSCH transmission scheduled by an M-DCI.

At least two SRS resource sets are configured for the PUSCH.

In some embodiments of the present disclosure, the apparatus includes the processing module, which is configured to:
define a first one of slots corresponding to a PUSCH transmission carrying a PHR MAC-CE as a PHR reporting slot n;
determine a related transmission occasion of a PHR among the PHRs corresponding to the PUSCH transmission associated with a TRP or a SRS resource set or a TCI state, and determine that related transmission occasions, respectively corresponding to the different PUSCH transmissions, correspond to the same TO in the transmission repetitions for the PUSCH with an STxMP configuration, in which the related transmission occasion is used for a measurement and calculation of the PHR corresponding to the PUSCH transmission; and
determine a related reporting manner of the PHR corresponding to the PUSCH transmission.

The transceiving module is specifically configured to measure and report the PHR corresponding to the PUSCH transmission based on the PHR reporting slot n, the related transmission occasion, and the related reporting manner.

In some embodiments of the present disclosure, the processing module is specifically configured to:
determine the related transmission occasion according to a TO corresponding to an earliest transmission repetition for the PUSCH in a slot overlapping with the PHR reporting slot n.

In some embodiments of the present disclosure, the processing module is specifically configured to:
take the TO corresponding to the earliest transmission repetition for the PUSCH as the related transmission occasion in a case where the earliest transmission repetition for the PUSCH is a valid TO; or
take a reference transmission occasion as the related transmission occasion in a case where the earliest transmission repetition for the PUSCH is an invalid TO and is discarded.

In some embodiments of the present disclosure, the processing module is specifically configured to:
take a first one of transmission occasions corresponding to the transmission repetitions for the PUSCH as the related transmission occasion.

In some embodiments of the present disclosure, the earliest transmission repetition for the PUSCH is an invalid TO and is discarded, and the PHRs respectively corresponding to the PUSCH transmissions are each a virtual PHR; or the earliest transmission repetition for the PUSCH is an invalid TO and is discarded, and the PHR is measured based on a reference transmission occasion, the PHRs respectively corresponding to the PUSCH transmissions are each an actual PHR.

In some embodiments of the present disclosure, the reference transmission occasion is a nearest transmission occasion within the PHR reporting slot n after the transmission occasion of the earliest transmission repetition for the PUSCH, and all PUSCH transmissions corresponding to the nearest transmission occasion are each an actual transmission; or the reference transmission occasion is a nearest transmission occasion before the PHR reporting slot n, and all PUSCH transmissions corresponding to the nearest transmission occasion are each an actual transmission.

In some embodiments of the present disclosure, with an STxMP configuration, the different PUSCH transmissions associated with different TRPs or different TCI states or different SRS resource sets are each an actual transmission, and the PHRs corresponding to the different PUSCH transmissions are each an actual PHR.

In some embodiments of the present disclosure, with an STxMP configuration, one PUSCH transmission of the different PUSCH transmissions associated with different TRPs or different TCI states or different SRS resource sets is an actual transmission, a PHR corresponding to the one PUSCH transmission is an actual PHR, a PHR corresponding to another PUSCH transmission is a virtual PHR, and the one PUSCH transmission and the other PUSCH transmission are associated with different TRPs or different TCI states or different SRS resource sets.

In some embodiments of the present disclosure, with an STxMP configuration, none of the different PUSCH transmissions associated with different TRPs or different TCI states or different SRS resource sets is actual transmissions, and the PHRs corresponding to the different PUSCH transmissions are each a virtual PHR.

In some embodiments of the present disclosure, the related reporting manner is associated with a PHR reporting mode, and the PHR reporting mode includes at least one of:
a two-PHR mode;
a multi-PHR mode;
a mode where a two-PHR mode is not configured; or
a mode where a multi-PHR mode is not configured.

In some embodiments of the present disclosure, the related reporting manner includes at least one of:
reporting the PHRs respectively corresponding to the different PUSCH transmissions;
reporting a first PHR among the PHRs respectively corresponding to the different PUSCH transmissions;
reporting a second PHR among the PHRs respectively corresponding to the different PUSCH transmissions; or
reporting an average PHR of the PHRs respectively corresponding to the different PUSCH transmissions.

In some embodiments of the present disclosure, for an STRP transmission, the first PHR is a PHR corresponding to an actual PUSCH transmission; and for an MTRP transmission, the first PHR is a PHR corresponding to a PUSCH transmission with a small absolute value of PH or a negative value of PH.

In some embodiments of the present disclosure, the second PHR is a PHR corresponding to a first one of the SRS resource sets or to a control resource pool index CoresetPoolIndex#0.

In some embodiments of the present disclosure, the different PUSCH transmissions support a transmission repetition type A and a transmission repetition type B.

In some embodiments of the present disclosure, the different PUSCH transmissions support a scheduled PUSCH and a grant-free CG PUSCH.

In some embodiments of the present disclosure, the TCI states each include at least one of:
an UL TCI state;
a joint TCI state, in which the joint TCI state is indicated based on a unified TCI state; or
a TCI state beam direction, in which the TCI state beam direction is indicated based on spatial relationship information.

Optionally, the above transceiving module is configured to execute related steps performed by the terminal in any one of the above methods, and thus the description thereof is omitted herein.

Optionally, the reporting apparatus further includes at least one of a sending module or a receiving module. The above sending module is configured to execute sending-related steps performed by the terminal in any one of the above methods, and the above receiving module is configured to execute receiving-related steps performed by the terminal in any one of the above methods, and thus the description thereof is omitted herein.

FIG. 8B is a block diagram of a receiving apparatus according to embodiments of the present disclosure. As shown in FIG. 8B, the receiving apparatus includes: a transceiving module, configured to send first information and receive PHRs corresponding to different PUSCH transmissions associated with TRPs or SRS resource sets or TCI states. The first information is used to configure a quantity N of transmission repetitions for a PUSCH and to configure an STxMP for the PUSCH. N is a positive integer greater than 1, where the PHRs are each a type 1 PHR.

In some embodiments of the present disclosure, the first information is indicated by a DCI or configured by a high layer signaling.

In some embodiments of the present disclosure, the STxMP is any one of: a PUSCH transmission based on an SDM scheduled by an S-DCI; a PUSCH transmission based on a spatial multiplexing SFN scheduled by an S-DCI; or a PUSCH transmission scheduled by an M-DCI.

At least two SRS resource sets are configured for the PUSCH.

In some embodiments of the present disclosure, for a PHR among the PHRs, the PHR corresponding to a PUSCH transmission associated with a TRP or an SRS resource set or a TCI state is measured and reported based on a PHR reporting slot n, a related transmission occasion, and a related reporting manner; and the different PUSCH transmissions are associated with different TRPs or different SRS resource sets or different TCI states, and
a first one of slots corresponding to a PUSCH transmission carrying a PHR MAC-CE is defined as the PHR reporting slot n; and
the related transmission occasion is used for a measurement and calculation of the PHR corresponding to the PUSCH, and it is determined that related transmission occasions, respectively corresponding to the different PUSCH transmissions, correspond to the same TO in the transmission repetitions for the PUSCH with an STxMP configuration.

In some embodiments of the present disclosure, the related transmission occasion of the PHR corresponding to the PUSCH transmission is determined based on a TO corresponding to an earliest transmission repetition for the PUSCH in a slot overlapping with the PHR reporting slot n.

In some embodiments of the present disclosure, the related transmission occasion of the PHR corresponding to the PUSCH transmission is a first one of transmission occasions corresponding to the transmission repetitions for the PUSCH.

In some embodiments of the present disclosure, the related reporting manner is associated with a PHR reporting mode, and the PHR reporting mode includes at least one of:
a two-PHR mode;
a multi-PHR mode;
a mode where a two-PHR mode is not configured; or
a mode where a multi-PHR mode is not configured.

In some embodiments of the present disclosure, the related reporting manner includes at least one of:
reporting the PHRs respectively corresponding to the different PUSCH transmissions;
reporting a first PHR among the PHRs respectively corresponding to the different PUSCH transmissions;
reporting a second PHR among the PHRs respectively corresponding to the different PUSCH transmissions; or
reporting an average PHR of the PHRs respectively corresponding to the different PUSCH transmissions.

In some embodiments of the present disclosure, for an STRP transmission, the first PHR is a PHR corresponding to an actual PUSCH transmission; and for an MTRP transmission, the first PHR is a PHR corresponding to a PUSCH transmission with a small absolute value of PH or a negative value of PH.

In some embodiments of the present disclosure, the second PHR is a PHR corresponding to a first one of the SRS resource sets or to a control resource pool index CoresetPoolIndex#0.

In some embodiments of the present disclosure, the different PUSCH transmissions support a transmission repetition type A and a transmission repetition type B.

In some embodiments of the present disclosure, the different PUSCH transmissions support a scheduled PUSCH and a grant-free CG PUSCH.

In some embodiments of the present disclosure, the TCI states each include at least one of:
an UL TCI state;
a joint TCI state, in which the joint TCI state is indicated based on a unified TCI state; or
a TCI state beam direction, in which the TCI state beam direction is indicated based on spatial relationship information.

Optionally, the above transceiving module is configured to execute related steps performed by the network device in any one of the above methods, and thus the description thereof is omitted herein.

Optionally, the receiving apparatus further includes at least one of a sending module or a receiving module. The above sending module is configured to execute sending-related steps performed by the network device in any one of the above methods, and the above receiving module is configured to execute receiving-related steps performed by the network device in any one of the above methods, and thus the description thereof is omitted herein.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

As shown in FIG. 9A, FIG. 9A is a block diagram of a communication device according to embodiments of the present disclosure. The communication device 9100 includes one or more processors 9101. The processor 9101 may be a general-purpose processor or a special-purpose processor, etc., such as a baseband processor or a processor. The baseband processor may be used to process communication protocols and communication data, while the central processor may be used to control communication devices (such as base stations, baseband chips, terminal devices, terminal device chips, DUs or CUs, etc.), execute programs, and process program data. The processor 9101 is configured to invoke instructions to cause the communication device 9100 to execute any one of the above methods.

In some embodiments, the communication device 9100 further includes one or more memories 9102 for storing instructions. Alternatively, all or part of the memory 9102 may be located outside the communication device 9100.

In some embodiments, the communication device 9100 further includes one or more transceivers 9103. When the communication device 9100 includes one or more transceivers 9103, communication steps such as sending and receiving in the above methods are performed by the transceiver 9103, and other steps are performed by the processor 9101.

In some embodiments, the transceiver may include a receiver and a transmitter, which may be separate or integrated together. Optionally, terms such as transceiver, transceiving unit, transceiving machine, and transceiving circuit may be used interchangeably, terms such as transmitter, transmitting unit, transmitting machine, and transmitting circuit may be used interchangeably; and terms such as receiver, receiving unit, receiving machine, and receiving circuit may be used interchangeably.

Optionally, the communication device 9100 further includes one or more interface circuits 9104, which are connected to the memory 9102. The interface circuit 9104 may be used to receive signals from the memory 9102 or other devices, and may be used to send signals to the memory 9102 or other devices. For example, the interface circuit 9104 may read instructions stored in the memory 9102 and send the instructions to the processor 9101.

The communication device 9100 in the description of the above embodiments may be a network device or a terminal, but the scope of the communication device 9100 described in the present disclosure is not particularly defined herein, and the structure of the communication device 9100 may not be limited by FIG. 9A. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

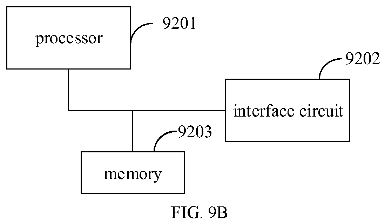

FIG. 9B is a block diagram of a chip according to embodiments of the present disclosure. For the case where the communication device 9100 may be a chip or a chip system, reference may be made to the block diagram of the chip 9200 shown in FIG. 9B, which is not limited herein.

The chip 9200 includes one or more processors 9201, which are configured to invoke instructions to cause the chip 9200 to perform any one of the above methods.

In some embodiments, the chip 9200 further includes one or more interface circuits 9202, which are connected to the memory 9203. The interface circuit 9202 may be used to receive signals from the memory 9203 or other devices, and the interface circuit 9202 may be used to send signals to the memory 9203 or other devices. For example, the interface circuit 9202 may read instructions stored in the memory 9203 and send the instructions to the processor 9201. Optionally, terms such as interface circuit, interface, transceiving pin, and transceiver may be used interchangeably.

In some embodiments, the chip 9200 further includes one or more memories 9203 for storing instructions. Optionally, all or part of the memory 9203 may be located outside of the chip 9200.

The present disclosure also provides a storage medium for storing instructions. When the instructions are running on the communication device 9100, the communication device 9100 is caused to implement any one of the above methods. Optionally, the above storage medium is an electronic storage medium. Optionally, the above storage medium is a computer-readable storage medium, but it is not particularly defined herein, and it may also be a storage medium readable by other devices. Optionally, the above storage medium may be, but is not limited to, a non-transitory storage medium, and it may also be a transitory storage medium.

In the embodiments of the present disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

The present disclosure also provides a program product. When the program product is executed by the communication device 9100, the communication device 9100 is caused to implement any one of the above methods. Optionally, the program product is a computer program product.

The present disclosure also provides a computer program. When the computer program is executed on a computer, the computer is caused to implement any one of the above methods.

All or some of the above embodiments may be implemented by software, hardware, firmware or any combination thereof. When implemented using software, all or some of the above embodiments may be implemented in the form of a computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (for example, in an infrared, wireless, or microwave manner, or the like). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those skilled in the art will recognize that the units and algorithm steps of the various examples described in conjunction with the embodiments disclosed herein may be implemented in electronic hardware or a combination of computer software and electronic hardware. Whether these functions are implemented in hardware or software depends on the specific application and design constraints of the technical solution. Those skilled in the art may use different methods to implement the described functionality for each specific application, but such implementation should not be considered beyond the scope of the present disclosure.

Those skilled in the art may understand that, for the sake of convenience and brevity, for the specific working processes of the systems, devices, and units described above, reference may be made to the corresponding processes in the foregoing method embodiments, which will not be repeated here.

The aforementioned are merely specific embodiments of the present disclosure, but the scope of the present disclosure is not limited thereto. Any modifications or replacements that would easily occur to a person skilled in the art, without departing from the technical scope disclosed in the disclosure, should be encompassed in the scope of the present disclosure. Therefore, the scope of the present disclosure shall be subject to the scope defined by the appended claims.

## Claims

1. A reporting method, performed by a terminal, and comprising:
receiving first information, wherein the first information is used to configure a quantity N of transmission repetitions for a physical uplink shared channel (PUSCH) and to configure a simultaneous transmission from multi-panel (STxMP) for the PUSCH, wherein N is a positive integer greater than 1; and
reporting power headroom reports (PHRs) corresponding to different PUSCH transmissions associated with transmission and reception points (TRPs) or sounding reference signal (SRS) resource sets or transmission configuration indication (TCI) states, wherein the PHRs are each a type 1 PHR.

2. The method according to claim 1, wherein the first information is indicated by downlink control information (DCI) or configured by a high layer signaling.

3. The method according to claim 1 or 2, wherein the STxMP is any one of: a PUSCH transmission based on space division multiplexing (SDM) scheduled by single downlink control information (S-DCI); a PUSCH transmission based on a spatial multiplexing single frequency network (SFN) scheduled by an S-DCI; or a PUSCH transmission scheduled by multi-downlink control information (M-DCI),
wherein at least two sounding reference signal (SRS) resource sets are configured for the PUSCH.

4. The method according to any one of claims 1 to 3, wherein for a PHR among the PHRs, reporting the PHR corresponding to a PUSCH transmission associated with a TRP or an SRS resource set or a TCI state comprises:
defining a first one of slots corresponding to a PUSCH transmission carrying a PHR media access control control element (MAC-CE) as a PHR reporting slot n;
determining a related transmission occasion of the PHR corresponding to the PUSCH transmission associated with the TRP or the SRS resource set or the TCI state, and determining that related transmission occasions, respectively corresponding to the different PUSCH transmissions, correspond to the same transmission occasion (TO) in the transmission repetitions for the PUSCH with an STxMP configuration, wherein the related transmission occasion is used for a measurement and calculation of the PHR corresponding to the PUSCH transmission;
determining a related reporting manner of the PHR corresponding to the PUSCH transmission; and
measuring and reporting the PHR corresponding to the PUSCH transmission based on the PHR reporting slot n, the related transmission occasion, and the related reporting manner.

5. The method according to claim 4, wherein determining the related transmission occasion of the PHR corresponding to the PUSCH transmission comprises:
determining the related transmission occasion according to a TO corresponding to an earliest transmission repetition for the PUSCH in a slot overlapping with the PHR reporting slot n.

6. The method according to claim 5, wherein determining the related transmission occasion according to the TO corresponding to the earliest transmission repetition for the PUSCH in the slot overlapping with the PHR reporting slot n comprises:
taking the TO corresponding to the earliest transmission repetition for the PUSCH as the related transmission occasion in a case where the earliest transmission repetition for the PUSCH is a valid TO; or
taking a reference transmission occasion as the related transmission occasion in a case where the earliest transmission repetition for the PUSCH is an invalid TO and is discarded.

7. The method according to claim 4, wherein determining the related transmission occasion of the PHR corresponding to the PUSCH transmission comprises:
taking a first one of transmission occasions corresponding to the transmission repetitions for the PUSCH as the related transmission occasion.

8. The method according to claim 5 or 6, wherein
the earliest transmission repetition for the PUSCH is an invalid TO and is discarded, and the PHRs respectively corresponding to the PUSCH transmissions are each a virtual PHR; or
the earliest transmission repetition for the PUSCH is an invalid TO and is discarded, and the PHR is measured based on a reference transmission occasion, the PHRs respectively corresponding to the PUSCH transmissions are each an actual PHR.

9. The method according to claim 6 or 8, wherein
the reference transmission occasion is a nearest transmission occasion within the PHR reporting slot n after the transmission occasion of the earliest transmission repetition for the PUSCH, and all PUSCH transmissions corresponding to the nearest transmission occasion are each an actual transmission; or
the reference transmission occasion is a nearest transmission occasion before the PHR reporting slot n, and all PUSCH transmissions corresponding to the nearest transmission occasion are each an actual transmission.

10. The method according to any one of claims 1 to 9, wherein with an STxMP configuration, the different PUSCH transmissions associated with different TRPs or different TCI states or different SRS resource sets are each an actual transmission, and the PHRs corresponding to the different PUSCH transmissions are each an actual PHR.

11. The method according to any one of claims 1 to 9, wherein with an STxMP configuration, one PUSCH transmission of the different PUSCH transmissions associated with different TRPs or different TCI states or different SRS resource sets is an actual transmission, a PHR corresponding to the one PUSCH transmission is an actual PHR, a PHR corresponding to another PUSCH transmission is a virtual PHR, and the one PUSCH transmission and the other PUSCH transmission are associated with different TRPs or different TCI states or different SRS resource sets.

12. The method according to any one of claims 1 to 9, wherein with an STxMP configuration, none of the different PUSCH transmissions associated with different TRPs or different TCI states or different SRS resource sets is actual transmissions, and the PHRs corresponding to the different PUSCH transmissions are each a virtual PHR.

13. The method according to any one of claims 4 to 9, wherein the related reporting manner is associated with a PHR reporting mode, and the PHR reporting mode comprises at least one of:
a two-PHR mode;
a multi-PHR mode;
a mode where a two-PHR mode is not configured; or
a mode where a multi-PHR mode is not configured.

14. The method according to any one of claims 4 to 9 and 13, wherein the related reporting manner comprises at least one of:
reporting the PHRs respectively corresponding to the different PUSCH transmissions;
reporting a first PHR among the PHRs respectively corresponding to the different PUSCH transmissions;
reporting a second PHR among the PHRs respectively corresponding to the different PUSCH transmissions; or
reporting an average PHR of the PHRs respectively corresponding to the different PUSCH transmissions.

15. The method according to claim 14, wherein
for a single transmission and reception point (STRP) transmission, the first PHR is a PHR corresponding to an actual PUSCH transmission; and
for a multi-transmission and reception point (MTRP) transmission, the first PHR is a PHR corresponding to a PUSCH transmission with a small absolute value of power headroom (PH) or a negative value of PH.

16. The method according to claim 14, wherein the second PHR is a PHR corresponding to a first one of the SRS resource sets or to a control resource pool index CoresetPoolIndex#0.

17. The method according to any one of claims 1 to 16, wherein the different PUSCH transmissions support a transmission repetition type A and a transmission repetition type B.

18. The method according to any one of claims 1 to 17, wherein the different PUSCH transmissions support a scheduled PUSCH and a grant-free configured grant (CG) PUSCH.

19. The method according to any one of claims 1 to 18, wherein the TCI states each comprise at least one of:
an uplink (UL) TCI state;
a joint TCI state, wherein the joint TCI state is indicated based on a unified TCI state; or
a TCI state beam direction, wherein the TCI state beam direction is indicated based on spatial relationship information.

20. A receiving method, performed by a network device, and comprising:
sending first information, wherein the first information is used to configure a quantity N of transmission repetitions for a physical uplink shared channel (PUSCH) and to configure a simultaneous transmission from multi-panel (STxMP) for the PUSCH, wherein N is a positive integer greater than 1; and
receiving power headroom reports (PHRs) corresponding to different PUSCH transmissions associated with transmission and reception points (TRPs) or sounding reference signal (SRS) resource sets or transmission configuration indication (TCI) states, wherein the PHRs are each a type 1 PHR.

21. The method according to claim 20, wherein the first information is indicated by downlink control information (DCI) or configured by a high layer signaling.

22. The method according to any one of claims 20 to 21, wherein the STxMP is any one of: a PUSCH transmission based on space division multiplexing (SDM) scheduled by single downlink control information (S-DCI); a PUSCH transmission based on a spatial multiplexing single frequency network (SFN) scheduled by an S-DCI; or a PUSCH transmission scheduled by multi-downlink control information (M-DCI),
wherein at least two sounding reference signal (SRS) resource sets are configured for the PUSCH.

23. The method according to any one of claims 20 to 22, wherein for a PHR among the PHRs, the PHR corresponding to a PUSCH transmission associated with a TRP or an SRS resource set or a TCI state is measured and reported based on a PHR reporting slot n, a related transmission occasion, and a related reporting manner; and the different PUSCH transmissions are associated with different TRPs or different SRS resource sets or different TCI states, wherein
a first one of slots corresponding to the PUSCH transmission carrying a PHR media access control control element (MAC-CE) is defined as the PHR reporting slot n; and
the related transmission occasion is used for a measurement and calculation of the PHR corresponding to the PUSCH, and it is determined that related transmission occasions, respectively corresponding to the different PUSCH transmissions, correspond to the same transmission occasion (TO) in the transmission repetitions for the PUSCH with an STxMP configuration.

24. The method according to claim 23, wherein the related transmission occasion of the PHR corresponding to the PUSCH transmission is determined based on a TO corresponding to an earliest transmission repetition for the PUSCH in a slot overlapping with the PHR reporting slot n.

25. The method according to claim 23, wherein the related transmission occasion of the PHR corresponding to the PUSCH transmission is a first one of transmission occasions corresponding to the transmission repetitions for the PUSCH.

26. The method according to any one of claims 23 to 25, wherein the related reporting manner is associated with a PHR reporting mode, and the PHR reporting mode comprises at least one of:
a two-PHR mode;
a multi-PHR mode;
a mode where a two-PHR mode is not configured; or
a mode where a multi-PHR mode is not configured.

27. The method according to any one of claims 23 to 26, wherein the related reporting manner comprises at least one of:
reporting the PHRs respectively corresponding to the different PUSCH transmissions;
reporting a first PHR among the PHRs respectively corresponding to the different PUSCH transmissions;
reporting a second PHR among the PHRs respectively corresponding to the different PUSCH transmissions; or
reporting an average PHR of the PHRs respectively corresponding to the different PUSCH transmissions.

28. The method according to claim 27, wherein
for a single transmission and reception point (STRP) transmission, the first PHR is a PHR corresponding to an actual PUSCH transmission; and
for a multi-transmission and reception point (MTRP) transmission, the first PHR is a PHR corresponding to a PUSCH transmission with a small absolute value of power headroom (PH) or a negative value of PH.

29. The method according to claim 27, wherein the second PHR is a PHR corresponding to a first one of the SRS resource sets or to a control resource pool index CoresetPoolIndex#0.

30. The method according to any one of claims 20 to 29, wherein the different PUSCH transmissions support a transmission repetition type A and a transmission repetition type B.

31. The method according to any one of claims 20 to 30, wherein the different PUSCH transmissions support a scheduled PUSCH and a grant-free configured grant (CG) PUSCH.

32. The method according to any one of claims 20 to 31, wherein the TCI states each comprise at least one of:
an uplink (UL) TCI state;
a joint TCI state, wherein the joint TCI state is indicated based on a unified TCI state; or
a TCI state beam direction, wherein the TCI state beam direction is indicated based on spatial relationship information.

33. A reporting method, comprising:
sending, by a network device, first information, wherein the first information is used to configure a quantity N of transmission repetitions for a physical uplink shared channel (PUSCH) and to configure a simultaneous transmission from multi-panel (STxMP) for the PUSCH, wherein N is a positive integer greater than 1;
receiving, by a terminal, the first information;
reporting, by the terminal, power headroom reports (PHRs) corresponding to different PUSCH transmissions associated with transmission and reception points (TRPs) or sounding reference signal (SRS) resource sets or transmission configuration indication (TCI) states, wherein the PHRs are each a type 1 PHR; and
receiving, by the network device, the PHRs corresponding to the different PUSCH transmissions associated with the TRPs or the SRS resource sets or the TCI states.

34. A reporting apparatus, comprising:
a transceiving module, configured to receive first information, wherein the first information is used to configure a quantity N of transmission repetitions for a physical uplink shared channel (PUSCH) and to configure a simultaneous transmission from multi-panel (STxMP) for the PUSCH, wherein N is a positive integer greater than 1; and
a processing module, configured to report power headroom reports (PHRs) corresponding to different PUSCH transmissions associated with transmission and reception points (TRPs) or sounding reference signal (SRS) resource sets or transmission configuration indication (TCI) states, wherein the PHRs are each a type 1 PHR.

35. A receiving apparatus, comprising:
a transceiving module, configured to send first information and receive power headroom reports (PHRs) corresponding to different physical uplink shared channel (PUSCH) transmissions associated with transmission and reception points (TRPs) or sounding reference signal (SRS) resource sets or transmission configuration indication (TCI) states, wherein the first information is used to configure a quantity N of transmission repetitions for a PUSCH and to configure a simultaneous transmission from multi-panel (STxMP) for the PUSCH, wherein N is a positive integer greater than 1, and the PHRs are each a type 1 PHR.

36. A communication system, comprising a terminal and a network device, wherein the terminal is configured to perform the method according to any one of claims 1 to 19, and the network device is configured to perform the method according to any one of claims 20 to 32.

37. A communication device, comprising:
one or more processors;
wherein the processor is configured to invoke instructions to cause the communication device to perform the method according to any one of claims 1 to 33.

38. A storage medium, having stored thereon instructions that, when run on a communication device, cause the communication device to perform the method according to any one of claims 1 to 33.
